# NEW EUROPEAN PATENT SPECIFICATION

(11) **EP 0 566 251 B2**
(45) Date of publication and mention of the opposition decision: **04.09.2002**
(45) Mention of the grant of the patent: 05.02.1997
(21) Application number: 93302123.0
(22) Date of filing: 19.03.1993
(51) Int. Cl.: C08G 18/10, C08G 18/48

(54) **Polyisocyanate composition**
Polyisocyanatzusammensetzung
Composition de polyisocyanate

(30) Priority: 16.04.1992 GB 9208377; 12.10.1992 GB 9221368
(43) Date of publication of application: 20.10.1993
(73) Proprietor: HUNTSMAN INTERNATIONAL LLC, Salt Lake City, Utah 84108 (US)
(72) Inventor: De Witte, Mireille, B-9820 Merelbeke (BE); Verhelst, Gabriel, B-3020 Herent (BE)
(74) Representative: Baken, Philippus Johannes L. H.

(56) References cited:
- EP-A- 0 022 617
- EP-A- 0 111 121
- EP-A- 0 344 551
- EP-A- 0 442 631
- EP-A- 0 454 930
- EP-A- 0 485 953
- US-A- 5 091 437
- R. Volland, J. Lindsey, W. schoberth : Proceedings of the Society of the Plastics Industry, Nov. 5-7, 1984, San Antonio, Texas, USA, pp. 86-91

## Description

The present invention is concerned with a novel polyisocyanate composition, a process for preparing a flexible foam from such a composition and a reaction system comprising such a composition for preparing a flexible foam.

The preparation of flexible foams by reacting a polyisocyanate and a polyol in the presence of a blowing agent has been extensively described in the prior art. e. g.EP 111121, US 5114989, UK 1422056, EP 22617, EP 10850, EP 422471, UK 1479658, US 4822517, US 4256849, US 4115429 and US 5091437.

Surprisingly it was found that an improved combination of properties was obtained if a flexible foam is prepared from a special polyisocyanate composition.

Accordingly the present invention is concerned with a polyisocyanate composition which is the reaction product of a diphenylmethane diisocyanate comprising 25-70 and preferably 25-35% by weight of 2,4'-diphenylmethane diisocyanate and a polyoxyethylene polyoxypropylene polyol having an oxyethylene content of 50-90 and preferably 60-90% by weight, an average nominal functionality of 2-6, and a number average hydroxyl equivalent weight of 700-2000, the reaction product having a free NCO content of 26.5 - 31.0% by weight. Further the invention is concerned with a polyisocyanate composition which is a blend of 90 to 50% by weight of the above reaction product having a free NCO content of 26.5-31.0% by weight 10-50% by weight of a polymethylene polyphenylene polyisocyanate having an average functionality of at least 2.1 and a free NCO content of 27.0-33.0% by weight; preferably with the proviso that the free NCO content of the polyisocyanate composition is 27.0-32.0% by weight.

Further the present invention is concerned with a reaction system comprising in separate containers
(a) a polyisocyanate composition as described above; and
(b) a polymer having at least two isocyanate-reactive groups and an equivalent weight of 700-3000.

Still further the present invention is concerned with a process for preparing a foam, in particular a flexible foam, by reacting a polyisocyanate composition as described above and a polymer having at least two isocyanate-reactive groups and an equivalent weight of 700-3000 under foam forming conditions using water as the sole blowing agent.

The diphenylmethane diisocyanate used for preparing the aforementioned reaction product may be any such diisocyanate preferably comprising 25-35% by weight of the 2,4'-isomer, not more than 5% by weight of the 2,2'-isomer and more preferably not more than 2% by weight, the remainder being 4,4'-isomer. Such diisocyanates are commercially available.

The polyol used for preparing the aforementioned reaction product preferably contains the oxyethylene moieties randomly distributed and most preferably has a number average hydroxyl equivalent weight of 1000-1800.

The term "average nominal hydroxyl functionality" is used herein to indicate the average functionality (number of hydroxyl groups per molecule) of the polyol composition on the assumption that the average functionality of the polyoxyalkylene polyols present therein is identical with the average functionality (number of active hydrogen atoms per molecule) of the initiator(s) used in their preparation although in practice it will often be somewhat less because of some terminal unsaturation. Preferably the level of unsaturation is less than 0.04 milliequivalents/gram.

The polyols used for preparing the reaction product are known in the art and can be obtained in conventional manner by reacting ethylene and propylene oxides simultaneously and/or sequentially in any order with an initiator having 2-6 active hydrogen atoms such as water, ethylene glycol, propylene glycol, butanediol, glycerol, trimethylol propane, ethylene diamine, triethanolamine, sucrose and sorbitol. Such polyols are commercially available.

The reaction product is prepared in a conventional way by combining the diisocyanate and the polyol at elevated temperature (40-100°C) and if desired in the presence of a urethane-formation enhancing catalyst like a tertiary amine or tin compound. The relative amounts of the diisocyanate and the polyol are chosen in such a way as to arrive at a free NCO content of the reaction product of 26.5-31.0% by weight and most preferably 26.5-28.0% by weight. In general the equivalent amount of diisocyanate will be substantially higher than the equivalent amount of polyol. The preparation of the reaction product is a routine operation for those skilled in the art in the light of the examples.

The polymethylene polyphenylene polyisocyanates which are present in the polyisocyanate composition according to the present invention in an amount of 10-50 and more preferably 15-40% by weight are also known in the art and are commercially available. Preferably a polyisocyanate is used having a free NCO content of 29.0-32.0% by weight.

These polyisocyanates are simply added to the reaction product described above followed by simple mixing in order to prepare the preferred polyisocyanate compositions according to the present invention.

The polyisocyanate compositions according to the present invention are used to make foams by reacting them with a polymer having at least two isocyanate-reactive groups and a number average equivalent weight of 700-3000 under foam forming conditions using water as the sole blowing agent.

Foam forming conditions are obtained by allowing the reaction between the polyisocyanate composition and the polymer to take place in the presence of water.

The amount of water will depend on the isocyanate index (100 times the ratio of the number of isocyanate groups over the number of isocyanate-reactive groups) used in preparing the foam and the desired density of the foams. In general the amount of water may range from 0.25 - 20% by weight calculated on the amount of polymer having at least two isocyanate-reactive groups and a number average equivalent weight of 700-3000.

This polymer may be selected from those generally known in the art, like from polyols and polyamines. Preferably the polymer has 2-6 isocyanate-reactive groups.

Isocyanate-reactive groups which may be present in the isocyanate-reactive polymer include primary amine, secondary amino, thiol, carboxy, enamino and, especially, hydroxyl groups.

Particularly important isocyanate-reactive polymers include polymeric polyols. Suitable polyols and methods for their preparation have been fully described in the prior art and, as examples of such polyols, there may be mentioned polyesters, polyesteramides, polythioethers, polycarbonates, polyacetals, polyolefins, polysiloxanes and, especially, polyethers.

Polyether polyols which may be used include products obtained by the polymerisation of a cyclic oxide, for example ethylene oxide, propylene oxide, butylene oxide or tetrahydrofuran in the presence, where necessary, of polyfunctional initiators. Suitable initiator compounds contain a plurality of active hydrogen atoms and include water and polyols, for example ethylene glycol, propylene glycol, diethylene glycol, cyclohexane dimethanol, resorcinol, bisphenol A, glycerol, trimethylolpropane, 1,2,6-hexanetriol or pentaerythritol. Mixtures of initiators and/or cyclic oxides may be used.

Especially useful polyether polyols include polyoxypropylene diols and triols and poly(oxyethylene-oxypropylene) diols and triols obtained by the simultaneous or sequential addition of ethylene and propylene oxides to di- or trifunctional initiators as fully described in the prior art. Mixtures of the said diols and triols can be particularly useful. Other particularly useful polyether polyols include polytetramethylene glycols obtained by the polymerisation of tetrahydrofuran.

Polyester polyols which may be used include hydroxyl-terminated reaction products of polyhydric alcohols such as ethylene glycol, propylene glycol, diethylene glycol, 1,4-butanediol, neopentyl glycol, 1,6-hexanediol, cyclohexane dimethanol, bis(hydroxyethyl) terephthalate, glycerol, trimethylolpropane, pentaerythritol or polyether polyols or mixtures of such polyhydric alcohols, and polycarboxylic acids, especially dicarboxylic acids or their ester-forming derivatives, for example succinic, glutaric and adipic acids or their dimethyl esters, sebacic acid, phthalic anhydride, tetrachlorophthalic anhydride or dimethyl terephthalate or mixtures thereof. Polyesteramides may be obtained by the inclusion of aminoalcohols such as ethanolamine in polyesterification mixtures. Polyesters obtained by the polymerisation of lactones, for example caprolactone, in conjunction with a polyol, or of hydroxy carboxylic acids such as hydroxy caproic acid, may also be used.

Polythioether polyols which may be used include products obtained by condensing thiodiglycol either alone or with other glycols, alkylene oxides, dicarboxylic acids, formaldehyde, amino-alcohols or aminocarboxylic acids.

Polycarbonate polyols which may be used include products obtained by reacting diols such as 1,3-propanediol, 1,4-butanediol, 1,6-hexanediol, diethylene glycol or tetraethylene glycol with diaryl carbonates, for example diphenyl carbonate, or with phosgene.

Polyacetal polyols which may be used include those prepared by reacting glycols such as diethylene glycol, triethylene glycol or hexanediol with formaldehyde. Suitable polyacetals may also be prepared by polymerising cyclic acetals.

Suitable polyolefin polyols include hydroxy-terminated butadiene homo- and copolymers and suitable polysiloxane polyols include polydimethylsiloxane diols and triols.

Other polyols which may be used comprise dispersions or solutions of addition or condensation polymers in polyols of the types described above. Such modified polyols, often referred to as "polymer" polyols have been fully described in the prior art and include products obtained by the in situ polymerisation of one or more vinyl monomers, for example styrene and acrylonitrile, in polymeric polyols, for example polyether polyols, or by the in situ reaction between a polyisocyanate and an amino- or hydroxy-functional compound, such as triethanolamine, in a polymeric polyol.

Polymer modified polyols which are especially useful are products obtained by in situ polymerization of styrene and/or acrylonitrile in poly(oxyethylene/oxypropylene) polyols having functionalities of 2-4, equivalent weights of 750-3000 and ethylene oxide contents of 5-50 %, preferably 5-30% on a weight basis of total oxyalkylene residues, and products obtained by in situ reaction between a polyisocyanate and an amino or hydroxy-functional compound (such as triethanolamine) in a poly(oxyethylene/oxypropylene) polyol having a functionality of 2-4, and equivalent weight of 750-3000 and an ethylene oxide content of 5-50 %, preferably 5-30 % on a weight basis of total oxyalkylene residues.

Polyoxyalkylene polyols containing from 5 to 50 % of dispersed polymer are particularly useful. Particle sizes of the dispersed polymer of less than 50 microns are preferred.

Other useful isocyanate-reactive polymers include polymeric polyamines, especially diamines and triamines, corresponding to the above described polymeric polyols. Suitable polyamines of polyether polyols are those described, for example, in US Patent No. 3,654,370 or are obtained by the cyanoethylation of polyols followed by hydrogenation. Polyoxypropylene diamines and triamines and mixtures thereof are preferred. Also useful are polymers containing both amino and hydroxyl groups obtained by the partial amination of polyols.

Further isocyanate-reactive polymers include imino-functional polymers. Such polymers have been described in US Patent No. 4,794,129 together with methods for their preparation and include polymers terminating in imine, oxazoline, imidazoline, N-alkyl imidazoline, oxazine, diazine, imino-ester, amidine, imidine, isourea and guanidine groups. The preferred imino-functional polymers are imine-terminated polyethers such as may be obtained, for example by reacting a polyether polyamine, especially a polyoxypropylene diamine or triamine, with an aldehyde or ketone.

Enamine functional polymers may be prepared either from secondary amine terminated resins (i.e. polyethers) by reaction with ketones/aldehydes having one or more alpha hydrogens, or by reacting ketone/aldehyde terminated resins (bearing alpha hydrogens) with secondary amines, providing for removal of the H₂O formed in the reactions. Secondary amine terminated resins can be obtained, for example by catalytic hydrogenation of the imino-functional polymers described hereinabove. Ketone/aldehyde terminated resins may be obtained, in general, by oxidation of the corresponding secondary or primary hydroxyl terminated resin. More highly enamine functional polymers can be prepared by oxidising a primary hydroxy functional resin to the corresponding polycarboxylic acid, conversion of the said groups to orthoesters, and treatment of the latter with an excess of a secondary amine. Each orthoester must contain at least one alpha hydrogen atom.

The foam-forming reaction mixture may contain one or more of the additives conventional to such reaction mixtures. Such additives include catalysts, for example tertiary amines and tin compounds, surface-active agents and foam stabilisers, for example siloxane-oxyalkylene copolymers, chain extenders, for example low molecular weight diols or diamines like ethylene glycol, propylene glycol, diethylene glycol, dipropylene glycol, ethylene diamine and diethyl toluene diamine, crosslinking agents, for example triethanolamine, flame retardants, organic and inorganic fillers, pigments, agents for suppressing the so-called boiling-foam effect like poly-dimethylsiloxanes and internal mould release agents.

These additives and the blowing agent preferably are premixed with the polymer comprising at least two isocyanate-reactive groups and having a number average equivalent weight of 700-3000.

The isocyanate index employed, taking into account all isocyanate-reactive ingredients used in preparing the foam, like water, chain extender, cross-linker and the polymer may range from 10-120, preferably from 40-105 and most preferably 50-100.

The polyisocyanate compositions according to the present invention are very useful for making foams, in particular flexible foams. Good quality flexible foams are obtainable having a density of 25-80 kg/m³. The foams may be slabstock or moulded flexible foams.

The gist of the present invention, illustrated in the following example, resides in the finding that by using a semi-prepolymer (the reaction product as described above), made from a diisocyanate having a relatively high 2,4'-isomer content and a polyol having a limited average hydroxyl equivalent weight and a relatively high ethylene oxide content and the semi-prepolymer having a relatively high NCO content, a fully water-blown, flexible foam is obtainable having a combination of desirable physical properties in particular low density in combination with a wide process latitude (which means a wide index range may be used), open foam-cells, a good cushioning comfort (resilience, hysteresis and compression set) and high softness.

### Example

A prepolymer is prepared by reacting 82.1 pbw of an isomeric mixture of diphenylmethane diisocyanate containing 30% 2,4'-isomer with 17,9 pbw of an oxyethylated/oxypropylated trimethylol propane-initiated polyol having an oxyethylene content of about 75% randomly distributed and a molecular weight of 4000. The reaction is carried out at 80-90°C for 2.5 hours and the prepolymer obtained had an NCO-content of 27.0% by weight. 75 pbw of the above prepolymer were blended with 25 pbw of polymeric MDI (isocyanate content of 30.7% by weight). This polyisocyanate composition was used in preparing a flexible foam.

The above polyisocyanate composition according to the present invention was used to make a flexible foam in a foam-cup by reacting the polyisocyanate composition at an index of 78 with a polyol composition which was prepared by mixing 100 parts by weight (pbw) of a glycerol initiated oxyethylene oxypropylene polyol containing 17% by weight oxyethylene groups (all tip) and having a molecular weight of 4800, 4 pbw of water, 0.1 pbw of Niax A1 (amine catalyst from Union Carbide), 0.6 pbw of Dabco 33 LV (amine catalyst from Air Products) and 1.0 pbw of Tegostab B 4113 (a surfactant from Goldschmidt, Tegostab is a trade mark). The foam obtained had the following properties: overall density (kg/m³): 53.3; core density (kg/m³): 52.2; resilience (%): 53; tensile strength (kPa): 121; elongation at break (%): 102; tear strength (N/m): 253; compression hardness (at 25, 40 and 65%, kPa): 5.0 6.5 and 15.3 respectively; hysteresis : 27; indentation hardness (at 25, 40 and 65%, N): 200, 291 and 575 respectively; compression set (deflection at 50% and 75% dry and at 50% and 75% humid): 13.9, 11.2, 16.1 and 10.4 respectively.

## Claims

1. Polyisocyanate composition which is the reaction product of a diphenylmethane diisocyanate comprising 25 to 70% by weight of 2,4'-diphenylmethane diisocyanate and a polyoxyethylene polyoxypropylene polyol having an oxyethylene content of 50 to 90% by weight, a number average hydroxyl equivalent weight of 700 to 2000 and an average nominal hydroxyl functionality of 2-6, the reaction product having a free-NCO content of 26.5 to 31% by weight.

2. Polyisocyanate composition according to claim 1 wherein the 2,4'- diphenylmethane diisocyanate content is 25-35% by weight and the oxyethylene content is 60-90% by weight.

3. Polyisocyanate composition according to claim 1 **characterised in that** the polyol contains the oxyethylene moieties randomly distributed.

4. Polyisocyanate composition according to claim 1 **characterised in that** the equivalent weight is 1000-1800.

5. Polyisocyanate composition according to claim 1 **characterised in that** the free NCO content is 26.5-28.0% by weight.

6. Polyisocyanate composition according to claim 1 **characterised in that** the 2,4'-diphenylmethane diisocyanate content is 25-35% by weight, the oxyethylene content is 60-90% by weight, the polyol contains the oxyethylene moieties randomly distributed, the free NCO content is 26.5-28.00% by weight and the equivalent weight is 1000-1800.

7. Polyisocyanate composition **characterised in that** the composition is a blend of 90-50% by weight of the Polyisocyanate composition according to claim 1 and 10-50% by weight of a polymethylene polyphenylene polyisocyanate having a functionality of at least 2.1 and a free NCO content of 27.0-33.0% by weight.

8. Reaction system comprising in separate containers
(a) a polyisocyanate composition according to claims 1-7; and
(b) a polymer having at least two isocyanate-reactive groups and a number average equivalent weight of 700-3000.

9. Process for preparing a foam by reacting components (a) and (b) according to claim 8 under foam forming conditions using water as the sole blowing agent.

## Patentansprüche

1. Polyisocyanatzusammensetzung, die das Reaktionsprodukt eines Diphenylmethandiisocyanats, das 25 bis 70 Gewichts-% 2,4'-Diphenylmethandiisocyanat umfaßt, und eines Polyoxyethylen-polyoxypropylen-polyols mit einem Oxyethylengehalt von 50 bis 90 Gewichts-%, einem Zahlenmittel des Hydroxyläquivalentgewichts von 700 bis 2000 und einer mittleren nominellen Hydroxylfunktionalität von 2 bis 6 ist, wobei das Reaktionsprodukt einen Gehalt an freiem NCO von 26,5 bis 31 Gewichts-% aufweist.

2. Polyisocyanatzusammensetzung nach Anspruch 1, wobei der Gehalt an 2,4'-Diphenylmethandiisocyanat 25 bis 35 Gewichts-% und der Oxyethylengehalt 60 bis 90 Gewichts-% beträgt.

3. Polyisocyanatzusammensetzung nach Anspruch 1,
**dadurch gekennzeichnet, daß**
das Polyol die Oxyethylenbestandteile zufällig verteilt enthält.

4. Polyisocyanatzusammensetzung nach Anspruch 1,
**dadurch gekennzeichnet, daß**
das Äquivalentgewicht 1000 bis 1800 beträgt.

5. Polyisocyanatzusammensetzung nach Anspruch 1,
**dadurch gekennzeichnet, daß**
der Gehalt an freiem NCO 26,5 bis 28,0 Gewichts-% beträgt.

6. Polyisocyanatzusammensetzung nach Anspruch 1,
**dadurch gekennzeichnet, daß**
der Gehalt an 2,4'-Diphenylmethandiisocyanat 25 bis 35 Gewichts-%, der Oxyethylengehalt 60 bis 90 Gewichts-% beträgt, das Polyol die Oxyethylenbestandteile zufällig verteilt enthält, der Gehalt an freiem NCO 26,5 bis 28,00 Gewichts-% und das Äquivalentgewicht 1000 bis 1800 beträgt.

7. Polyisocyanatzusammensetzung,
**dadurch gekennzeichnet, daß**
die Zusammensetzung eine Mischung aus 90 bis 50 Gewichts-% der Polyisocyanatzusammensetzung nach Anspruch 1 und 10 bis 50 Gewichts-% eines Polymethylen-polyphenylen-polyisocyanats mit einer Funktionalität von mindestens 2,1 und einem Gehalt an freiem NCO von 27,0 bis 33,0 Gewichts-% ist.

8. Reaktionssystem, das in getrennten Behältern die nachstehenden Bestandteile umfaßt:
(a) eine Polyisocyanatzusammensetzung nach den Ansprüchen 1 bis 7; und
(b) ein Polymer mit mindestens zwei isocyanat-reaktiven Gruppen und einem Zahlenmittel des Äquivalentgewichts von 700 bis 3000.

9. Verfahren zur Herstellung eines Schaumstoffs durch die Umsetzung der Bestandteile (a) und (b) nach Anspruch 8 unter Schaumstoffbildungsbedingungen und unter Verwendung von Wasser als dem einzigen Treibmittel.

## Revendications

1. Composition de polyisocyanate qui est le produit de réaction d'un diphénylméthane-diisocyanate comprenant 25 à 70 % en poids de 2,4'-diphénylméthanediisocyanate et d'un polyoxyéthylène-polyoxypropylènepolyol ayant une teneur en oxyéthylène de 50 à 90 % en poids, une moyenne numérique du poids équivalent d'hydroxyle de 700 à 2000 et une fonctionnalité hydroxyle nominale moyenne de 2 à 6, produit de réaction qui a une teneur en groupes NCO libres de 26,5 à 31 % en poids.

2. Composition de polyisocyanate suivant la revendication 1, dans laquelle la teneur en 2,4'-diphénylméthane-diisocyanate est comprise dans l'intervalle de 25 à 35 % en poids et la teneur en oxyéthylène est comprise dans l'intervalle de 60 à 90 % en poids.

3. Composition de polyisocyanate suivant la revendication 1, **caractérisée en ce que** le polyol contient les groupements oxyéthylène distribués de manière aléatoire.

4. Composition de polyisocyanate suivant la revendication 1, **caractérisée en ce que** le poids équivalent est compris dans l'intervalle de 1000 à 1800.

5. Composition de polyisocyanate suivant la revendication 1, **caractérisée en ce que** la teneur en groupes NCO libres est comprise dans l'intervalle de 26,5 à 28,0 % en poids.

6. Composition de polyisocyanate suivant la revendication 1, **caractérisée en ce que** la teneur en 2,4'-diphénylméthane-diisocyanate est comprise dans l'intervalle de 25 à 35 % en poids, la teneur en oxyéthylène est comprise dans l'intervalle de 60 à 90 % en poids, le polyol contient les groupements oxyéthylène distribués de manière aléatoire, la teneur en groupes NCO libres est comprise dans l'intervalle de 26,5 à 28,00 % en poids et le poids équivalent est compris dans l'intervalle de 1000 à 1800.

7. Composition de polyisocyanate suivant la revendication 1, **caractérisée en ce qu'**elle consiste en un mélange de 90 à 50 % en poids de la composition de polyisocyanate suivant la revendication 1, et de 10 à 50 % en poids d'un polyméthylène-polyphénylène-polyisocyanate ayant une fonctionnalité d'au moins 2,1 et une teneur en groupes NCO libres de 27,0 à 33,0 % en poids.

8. Système réactionnel comprenant, dans des récipients distincts
(a) une composition de polyisocyanate suivant les revendications 1 à 7 ; et
(b) un polymère ayant au moins deux groupes réactifs avec les isocyanates et une moyenne numérique du poids équivalent de 700 à 3000.

9. Procédé de préparation d'une mousse par réaction des constituants (a) et (b) suivant la revendication 8 dans des conditions de formation de mousse en utilisant de l'eau comme seul agent porogène.
